# EUROPEAN PATENT SPECIFICATION

(11) **EP 1 920 134 B1**
(45) Date of publication and mention of the grant of the patent: **10.06.2020**
(21) Application number: 06778549.3
(22) Date of filing: 29.08.2006
(51) Int. Cl.: E21B 44/00, G06F 3/14

(54) **USER INTERFACE FOR ROCK DRILLING RIG**
BENUTZERSCHNITTSTELLE FÜR GESTEINSBOHRMASCHINE
INTERFACE UTILISATEUR POUR INSTALLATION DE FORAGE DE ROCHES

(30) Priority: 30.08.2005 FI 20055461
(43) Date of publication of application: 14.05.2008
(73) Proprietor: Sandvik Mining and Construction Oy, 33330 Tampere (FI)
(72) Inventor: MUONA, Jouko, FI-37200 Siuro (FI); OSARA, Jukka, FI-39100 Hämeenkyrö (FI); HAVERINEN, Eemeli, FI-33100 Tampere (FI); SÄLENIEMI, Tommi, FI-33410 Tampere (FI); KEMPPAINEN, Timo, FI-33270 Tampere (FI); JUNNIKKALA, Ari, FI-37140 Nokia (FI); VIRTANEN, Isto, FI-37530 Lempäälä (FI); KOSKELAINEN, Jussi, FI-00350 Helsinki (FI); EILO, Erkki, FI-37140 Nokia (FI)
(74) Representative: Sandvik
(86) International application number: PCT/FI2006/050366
(87) International publication number: WO 2007/026051

(56) References cited:
- JP-A- 10 306 676
- US-A- 4 507 735
- US-A- 4 875 530
- US-A- 6 152 246
- US-A1- 2002 060 093
- US-A1- 2004 182 606
- US-B1- 6 282 452
- US-B1- 6 282 452

## Description

### FIELD OF THE INVENTION

The invention relates to an arrangement of a user interface for a rock drilling rig and for a control system thereof.

### BACKGROUND OF THE INVENTION

A rock drilling event comprises a plurality of steps, such as moving feed beam against rock, collaring, full power drilling, and finishing. These steps are very different and a large amount of different information is presented to the operator by means of several meters. Management of the incoming information flow is not easy for the operator monitoring and controlling the drilling event. A rock drilling rig may comprise a plurality of booms capable of simultaneous drilling, i.e. several drilling events may be in progress. Even if the drilling could be coupled to automatic control, the operator still has to be able to monitor the progress of a plurality of different drilling events, if need be. In accordance with a known solution, an active working phase can be indicated for switching on a led light in a control panel, i.e. a led light associated with the active working phase is turned on from a led light beam. A known solution for information management in drilling is disclosed in US 6282452 B1.

### BRIEF DESCRIPTION OF THE INVENTION

The object of the present invention is to provide a new and improved user interface for rock drilling rigs. The object of the invention is achieved with a control apparatus, a rock drilling rig, a computer program product and a method, which are characterized in what is stated in the independent claims. Some preferred embodiments are described in the dependent claims.

In accordance with an aspect of the invention, the control unit that controls the information displayed on the display of the control apparatus of the rock drilling rig is arranged to display a working phase indicator on the display, and rock drilling phase-specific display information elements are associated with the different working phases of a rock drilling event which comprises three or more different working phases. The control apparatus is arranged to specify one of the different working phases of the rock drilling event and to update the working phase indicator so as to display at least one display information element that is specified in accordance with the working phase specified. Generally, a display information element refers to an indication to be displayed to an operator in any form for indicating the working phase of the rock drilling event.

In accordance with an embodiment, the control unit is arranged to display a plurality of information elements in the working phase indicator, at least two information elements at a time, each of the information elements indicating a different working phase, wherein the working phase indicator is adapted to indicate the current working phase, the previous working phase and/or the following working phase. Each one of the current working phase, the previous working phase and the following working phase is one of the three or more different working phases of the rock drilling event. Typically, a drilling event includes a given working cycle, i.e. the working phases are advanced in order, allowing the following working phase in the drilling event to be displayed to the operator.

In accordance with another embodiment, the input device of the control apparatus is arranged to receive an input from a user regarding a change of working phase. The control apparatus is arranged to update the display information elements displayed in the working phase indicator in response to an input received from the input device and indicating a change of working phase.

The operator of the drilling apparatus may be offered an improved solution for managing drilling cycles. The operator may be shown, on the display, information on the state of the drilling event (typically a working cycle) what is to be updated on the basis of the changes. Such an updateable working phase indicator improves usability, since the operator is able to easily and fast get an impression from the working phase indicator about the current phase of the drilling event, when otherwise monitoring the display. This is particularly usable for inexperienced operators and in situations wherein there is need to monitor and/or control a plurality of simultaneous drilling events, for example when drilling with a plurality of drilling booms. State information may be displayed consistently at the same position on the display.

### BRIEF DESCRIPTION OF THE FIGURES

Some embodiments of the invention will be described in more detail in the accompanying drawings, in which
Figure 1 schematically shows a rock drilling rig;
Figures 2a and 2b illustrate some operational units of a control system for a rock drilling rig;
Figure 3 shows a working phase indicator according to an embodiment;
Figure 4 illustrates a method according to an embodiment; and
Figure 5a and 5b show some exemplary user interfaces.

In the figures, some embodiments of the invention are displayed in a simplified manner for the sake of clarity. In the figures, like parts are denoted with the same reference numerals.

### DETAILED DESCRIPTION OF SOME EMBODIMENTS OF THE INVENTION

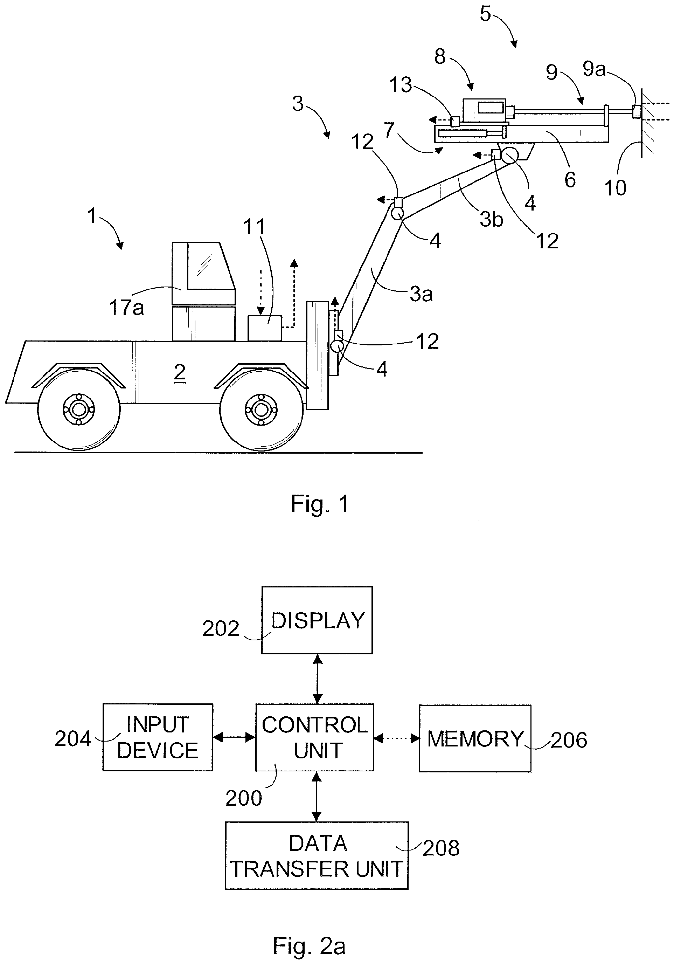

Figure 1 illustrates a rock drilling rig. It is to be noted that applying the invention is not restricted to any specific rock drilling rig. The invention may also be applied to remote-controlled rock drilling rigs, wherein part of the control means of the rock drilling rig is placed in a separate monitoring room, above ground, for example. This being so, at least part of the characteristics of the invention may thus be implemented in connection with a user interface external to the rock drilling rig.

The rock drilling rig 1 shown in Figure 1 may comprise a movable carrier 2, in which one or more drilling booms 3 are arranged. The drilling boom 3 may be composed of one or more boom parts 3a, 3b, which may be connected with each other and with the carrier 2 with joints 4 in a manner allowing the booms 3 to be moved versatilely in different directions. Furthermore, the free end of each drilling boom 3 may comprise a drilling unit 5, which may comprise a feed beam 6, a feeding device 7, a rock drill section 8 and a tool 9, whose outermost end comprises a drill bit 9a. The rock drill 8 is movable by means of the feeding device 7 relative to the feed beam 6 in a manner allowing the tool 9 to be fed during drilling towards a rock 10. The rock drill 8 may comprise an impact device for supplying shock pulses to the tool 9, and further a rotating device for rotating the tool 9 around its longitudinal axis. The rock drilling rig 1 comprises a drilling control system 11 for controlling the drilling. The drilling control system 11 may give commands to actuators moving the drilling boom 3 and to other actuators affecting the execution of the drilling event. Furthermore, one or more sensors 12 may be arranged in connection with the joints 4 of the drilling boom 3, and one or more sensors 13 may be arranged in connection with the drilling unit 5. The measurement data obtained from the sensors 12, 13 may be conveyed to the control apparatus 11, which can use the measurement data to determine the position and direction of the drilling unit 5 for controlling purposes. The drilling control system 11 may be adapted to consider the position of the drilling unit 5 as the position of the drill bit 9a and the direction of the longitudinal axis of the tool 9. It is to be noted that the drilling control system 11 may be composed of a plurality of subsystems and comprise a plurality of control units, as will be illustrated in the following examples.

Figure 2a illustrates some operational units of the control apparatus of a rock drilling rig 1, wherein the operational units may be located in the rock drilling rig 1 or in a possible separate monitoring room. A control unit 200 may be part of the general drilling control system 11 of Figure 1 or in a separate user interface control system and it attends to at least the control of a display 202. Thus, the control unit 200 controls the operations of at least some other operational units of the rock drilling rig 1 and is part of the control system of the rock drilling rig 1. The user interface of the rock drilling rig 1 comprises an input device 204 and a display 202. In addition, the user interface may comprise other parts, such as a loudspeaker. The input device 204 may be any device or a combination of devices, such as a mouse, a spherical controller, a touch screen and/or a joystick that receives inputs from a user. The device of Figure 2a also comprises a data transfer unit 208, which attends to data transfer between the control unit and at least one external data transfer unit. The data transfer unit 208 may attend to the reception of measurement data from sensors 12, 13 and to the transmission of control data to the drilling unit 5, for example. The internal control of the device may utilize some suitable bus technique. The rock drilling rig 1 may also communicate wirelessly, in which case the apparatus 1 comprises a wireless transceiver. The apparatus 1 also comprises memory 206, in which computer program code for controlling the control unit 200 and/or different settings and data employed for controlling the rock drilling rig 1 may be stored, for example.

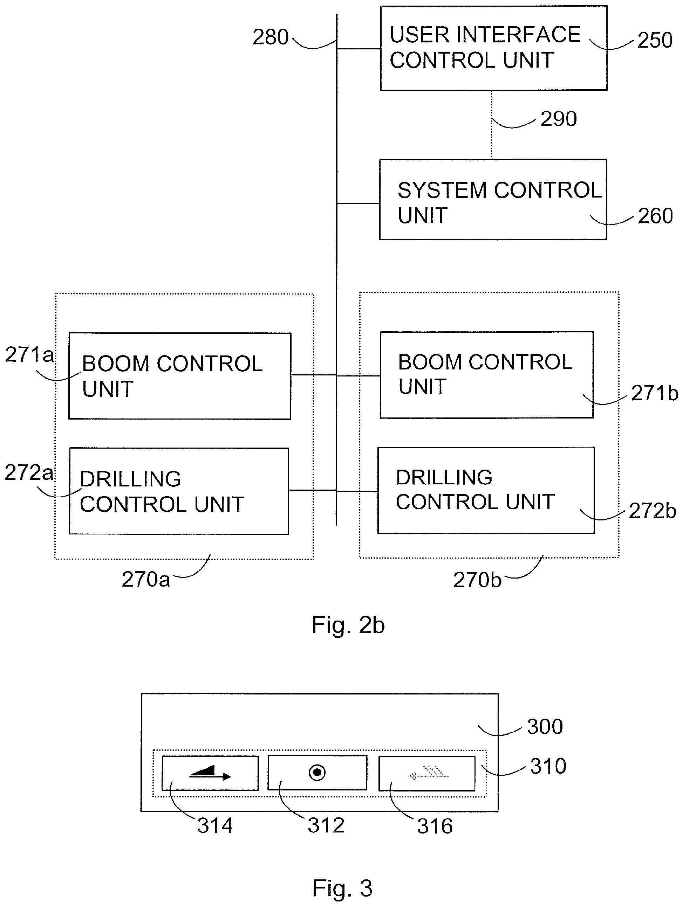

Computer program codes executed in the processing unit of the rock drilling rig 1 or the external monitoring room may cause the control system to make the control unit 200 implement actions associated particularly with the control of a multi-phase rock drilling event, some embodiments thereof being illustrated below in connection with Figures 2b, 3a, 3b, 4, 5a and 5b. It is also possible to use a hardware solution or a combination of software and hardware solutions for implementing the inventive functions. Information and computer program code affecting the operation of the rock drilling rig 1 may be stored with a separate memory means and possibly transferred via a network to the memory 206 for implementing the operations of the control unit 200.

Figure 2a shows a control unit 200 that controls the operation of the user interface and controls at least the display 202. The control unit 200 may be arranged to execute also other control functions. It is to be noted that the rock drilling rig 1 may comprise a plurality of control units for different purposes.

Figure 2b illustrates a control system configuration of the rock drilling rig 1 that may constitute the drilling control system 11 illustrated in Figure 1. The control system of the rock drilling rig 1 may comprise a plurality of subsystems 270a, 270b having separate control units. In the control system example of Figure 2b, a separate drilling unit-specific control process or control aggregate 270a, 270b is arranged for each boom or other type of drilling unit, possibly in such a manner that each boom or other type of drilling unit is controlled and monitored by a separate data processing device. In the system of Figure 2b, the different control units may be implemented with separate data processing devices. Each drilling unit-specific control process 270a, 270b may comprise a boom control unit 271a, 271b particularly for controlling the movement of the drilling unit, and a drilling control unit 272a, 272b for controlling the drilling performed with said drilling unit. These control units 271a, 271b, 272a, 272b are further connected to appropriate sensors and/or valves (not shown in Figure 2b). For system management there is a separate system control unit 260. A user interface control unit 250 controls the user interface and receives operator inputs from input devices (not shown in Figure 2b). The user interface control unit 250 may be the control unit 200, illustrated in connection with Figure 2a and hereinafter, to which operator input devices 204 and a display 202 are connected.

Information specified by the separate control aggregate and/or process 270a, 270b is transferred to the user interface control unit 250 that is arranged to display data received from these different units on the display 202. In particular, a working phase state machine for a drilling event executable in said drilling unit may be maintained in the drilling unit-specific process 270a, 270b, i.e. the working cycle may be specified on the basis of predetermined working cycle specifications and/or commands received from a user. The process 270a, 270b specifies working phase state information that is transmitted to the user interface control unit 250. By utilizing functions to be described later, the control unit 250 is able to use the received state information to maintain a working cycle indicator on the display 202. Correspondingly, separate control units may be controlled from one input device 204, in which case the control unit 250 transfers control commands to a suitable control aggregate 270a, 270b, for instance to the control device 271a, 271b of the boom currently controlled by the user. In this case, the functions associated with the input device 204 (and the control unit) may vary on the basis of the operating situation and/or the object to be controlled. Information is maintained in the user interface control device 250 about the object to be currently controlled and about the functions selectable with the input device 204 and at least about the control units to which an input supplied to the input device 204 is to be relayed. Alternatively, different input devices 204 are employed for managing the different objects and/or other control units are connected to the input device 204.

The control units 250, 260, 271a, 271b, 272a, 272b are connected to a data transfer bus 280, for instance to a bus based on the CAN bus technique (Controller Area Network). Figure 2b also illustrates with a broken line 290 a second data transfer interface between the system control unit 260 and the user interface control unit 250, which may be based on Ethernet data transfer, for example.

However, a more detailed description of these control units 260, 271a, 271b, 272a, 272b is not required for understanding the invention. The control system, for instance the system control unit 260, may include a subsystem for data collection and reporting and a separate reporting program may be employed for displaying report data to the operator. In the following, the operation of the control system will be illustrated in more detail with reference to Figure 2a. The control system illustrated above may be located in the rock drilling rig 1 (control apparatus 11). Alternatively, at least part of the control apparatus is located separately from the rock drilling rig 1. For example, the display 202, one or more control units 200 and user interface means for controlling the rock drilling rig 1 may be implemented in a monitoring room located above ground.

The control unit 200 that controls the display 202 is arranged to display the working phase indicator on the display 202, and rock drilling phase-specific display information elements are associated with the different working phases of a rock drilling event. The indicator indicating the working phases may also be called a working (phase) cycle indicator or a working state indicator. The control unit 200 is arranged to update the at least one display information element displayed in the working phase indicator in accordance with the current working phase. The display information element may be stored in the memory 206 and it may be text, an image or a combination thereof, for example. Binding information that associates rock drilling phases (indicators) and display information elements with each other may be stored in the memory 206. In connection with a change of working phase, the control unit 200 may retrieve the display information element associated with the working phase from the memory 206 on the basis of the binding information and the working state information or an indicator, and control it to be displayed in the working phase indicator. The working phase may be known to the control unit 200, e.g. stored in the memory 206, in response to a user input or a change of automatic working cycle. Alternatively, if the management of a drilling event is implemented in a different unit, the control unit 200 may receive information from said different unit automatically or in response to a prompt.

Figure 3 illustrates a working phase indicator 300 according to an embodiment. The working phase indicator 300 comprises an updateable area 310 for indicating the current working phase 312, the previous working phase 314 and the following working phase 316. In this space 310, rock drilling phase-specific display information elements 312, 314, 316 are shown. Figure 3 illustrates the use of icons, but implementing the invention is not restricted to any special information type. A plurality of other ways of presentation may also be used. The display information elements 312, 314, 316 may also be emphasized in different manners, such as by the use of different colours, different contrasts, blinking an information element, etc.

In accordance with an embodiment, supplementary information about one or more indicated working phases is displayed in the working phase indicator 300. Some examples are presented in the following. Supplementary information about the current working phase may be displayed in the space 312 or outside thereof. For example, supplementary text information about the state of the working phase is displayed above the information element 312. A given working phase may have sub-phases, e.g. 'start', 'full power' and 'stop', which are displayed as supplementary information. Other elements on the display 202 may also be updated on the basis of the working phase. For example, measurement information received from the drilling device 5 may be displayed on the display 202, possibly also in the working phase indicator 300. Naturally, information about the current working phase has to be displayed on the display 202, the drilling plan, for example. Supplementary information may also be provided by different manners of emphasizing.

In accordance with an embodiment, the working phase indicator 300 is part of the display 202 and the control unit 200 is arranged to display it in the different views of the display 202 in a fixed position in a manner allowing the user to always obtain information about at least the current rock drilling phase in the same position.

A rock drilling event includes a plurality of phases, and the working phase indicator 300 may be used to illustrate the working phase cycle to the user better than previously. For example, at lest some of the following phases may be separated from a rock drilling event: boom positioning, moving feed beam against rock, collaring, acceleration ramp, full power drilling, finishing, reverse drifter and reversing feed beam from rock. Accordingly, a hole to be drilled is subjected to these phases, after which the working cycle may again transfer to boom positioning for the following hole. Transfer from one working phase to another is carried out in response to a decision to change working phases by the control process (e.g. process 270a, 270b in Figure 2b) and/or an input by the operator. For example, part of the working cycle may be carried out automatically, whereas the transfer to a given working phase requires an input by the operator. The working phases have special display information elements, which are updated at points descriptive of the current phase 312, the previous phase 314 and the following phase 316 of the working phase indicator 300 of Figure 3, for example. However, it should be noted that the working phases shown in the working phase indicator are not limited to these, but any drilling event working phase cycle can be indicated with appropriate detailing.

Typically, one drilling unit, such as a boom or a bar, performs one sequential working cycle, but the working cycle may include a phase from which a new working cycle is initiated as a sub-process. The new working cycle may be an auxiliary function, such as a sequence of working phases relating to bar processing, and it is optionally implemented as the original working cycle continues. The new working phase may also have to be initiated because of a state of emergency, for instance when a drill bit is stuck. In accordance with an embodiment, the control unit 200 is arranged to update the working phase indicator 300 or to display a new working phase indicator 300 for a sub-process on the display 202. The control unit 200 may be arranged to specify a plurality of areas 310 in the working phase indicator 300 for the different working cycles of the same drilling unit. In accordance with an embodiment, the control unit 200 is arranged to indicate special situations in the working phase indicator 300.

In accordance with an embodiment, the control unit 200 that controls the display 202 is arranged to check if the working phase is inhibited in the current situation of the rock drilling event. This check may be implemented for instance on the basis of settings stored in advance in the memory 206 in response to a change of working phase or to a need to change working phases. The control unit 200 is arranged to display the inhibited working phase with a display information element different from an allowed working phase. The control unit 200 (or another control unit, such as a possible separate control unit that controls the drilling process) is arranged to inhibit the change of rock drilling phase to the inhibited working phase. Thus, a transfer to an inhibited working phase selected by the user may be prevented or a transfer to the inhibited working phase may be prevented by preventing user selections with the input device 204.

In accordance with an embodiment, the rock drilling rig 1 includes different operating modes, in accordance with which transfer between the different working states is arranged. As was mentioned, the rock drilling rig 1 may have a manual control mode, whereby working states are changed in response to user input, or an automatic control mode, whereby working states may be changed without user input at the end of the previous working phase. Other more detailed operating modes may also be used. For example, the apparatus 1 may include a selectable stepwise (STEP) mode, wherein the working cycle always ends after each working phase. Another exemplary mode is a hole drilling mode (HOLE), wherein the working cycle ends after the drilling of one hole. The working cycle may also be continuous (CONT), in which case the boom is positioned according to planned sequences, i.e. the working cycle is performed for specified drilling objects. In this automatic mode (CONT), too, the operator may, when desired, manually control the functions of the apparatus 1, and changes working phases with the input device 204, for example. The working phase indicator 300 may indicate the operating mode and/or display the display information elements in accordance with the operating mode. The control unit 200 may be arranged to set one or more working states as inhibited in the above-mentioned manner on the basis of the current operating mode. The user interface also provides an option to change operating modes.

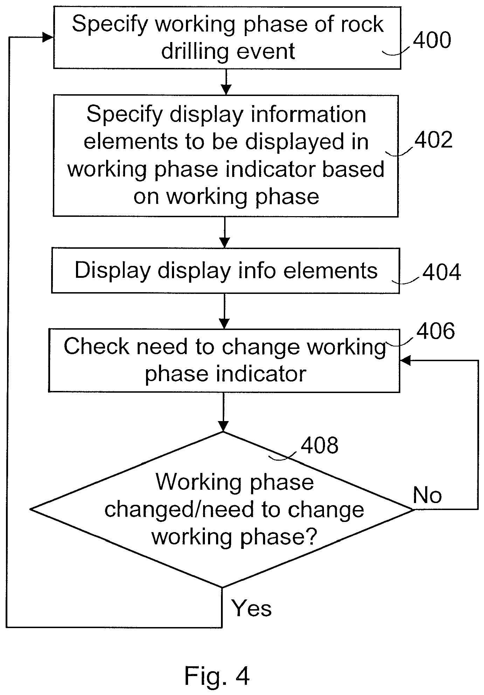

Figure 4 illustrates a basic process relating to the working phase indicator 300 in accordance with an embodiment, implementable in the control unit 200. In step 400, the working phase of the rock drilling event is specified, on the basis of which the display information elements to be displayed in the working phase indicator 300 are specified 402; elements 312, 314 and 316 in the example of Figure 3. The specification of the working phase in step 400 may be arranged, depending on the implementation, during a change of working phase or on the basis of information indicative of a change of working phase. For example, when the control system of Figure 2b is applied, the control unit 250 may specify the working phase on the basis of state information received from the boom-specific control process 270a, 270b. In accordance with an embodiment, the information element, e.g. an icon, to be displayed on the device 202, may be specified on the basis of the binding information and working phase state information stored in the memory 206 or a working phase identifier from the memory 206.

In step 404, the specified display information elements are displayed. Typically in a rock drilling event, a transfer either to the following or to the previous working phase takes place one step at a time allowing the working phases to be 'scrolled' in step 400. In step 406, a check is made as to whether there is need to update the working phase indicator 300. The control unit 200, 250 may carry out step 406 on the basis of information or a command received from another system part, for example on the basis of state information or other information received from the second control process 270a, 270b of Figure 2b. This step may be arranged as part of a general screen update or possibly in response to an input (not shown in Figure 4) received in the control unit 200, for example an input received from the input device 204. If the check 406, 408 indicates that the working phase has changed, then it is necessary to update the working phase indicator 300, and the process continues to step 400. If the changed working phase (and any other working phases to be displayed in the working phase cycle element) is already known, step 402 can be directly entered. Alternatively, step 406 is re-entered.

Figure 4 is simplified; it does not show the start or end of the process or supplementary embodiments, but other steps may also be added to this basic process on the basis of the description. For example, separate check steps may exists for user inputs achieving or indicating a change of working phase and information received from the system control process 270a, 270b. It should also be noted that it is not necessary to carry out the separate check step 406 in the process, instead, information is received in the process about a change of working phase, after which step 400 may be entered.

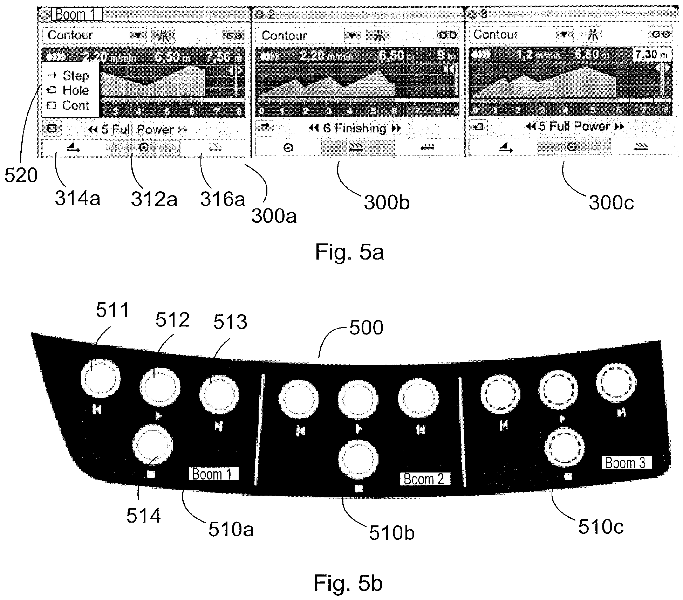

Figures 5a and 5b illustrate some user interface parts for a rock drilling rig 1. Figure 5a illustrates a view in the display 202, with boom-specific working phase indicators 300a, 300b and 300c separately for three booms descriptive of their working situation. The system working cycle is indicated to all booms. As is denoted for boom 1, the system shows a current working phase 312a, a previous working phase 314a and a following working phase 316a of the working cycle. An information element 316a, indicative of the following working phase, may indicate the working phase into which the system is transferred next during an automatic working cycle mode. If the user is able to determine the transfer to the following working phase, the information element 316a may be shown emphasized. In the example of Figure 5a, the information element 316a is shown different (grey) from allowed transfers. The information element 314a indicating the previous working phase may indicate the previous working phase during the automatic working cycle mode. If the user is able to determine the transfer to the previous working phase, the information element 314a may be displayed emphasized. The section of boom 1 also shows a menu 520 enabling a change of operating mode. The operating mode is indicated in the working phase indicator 300a, 300b, 300c, with an icon located at the left edge, i.e. the operating mode of boom 1 is automatic (CONT). Other boom-specific information may also be displayed to the operator; Figure 5a illustrates some different information sources, information relating to which can be received by the control unit 200 and controlled to be displayed on the display 202.

Figure 5b shows a control panel part 500 serving as the input device 204 that the control unit 200 can use for receiving inputs from the user and for controlling, on the basis of the inputs, the working phase indicators 300a, 300b, 300c. For example, the control panel 500 may be located in an armrest of the rock drilling rig 1. For each boom, the control panel 500 comprises a special control aggregate 510a, 510b and 510c. Each control aggregate has three buttons with related working cycle control operations 'previous' (working phase) 511, 'following' 513, 'start-up' 512, and 'stop' 514 indicated with icons denoted below the buttons. When the user interface according to Figure 5a and 5b is applied, the user may for instance control the boom 1 with the control aggregate 510a, the working state of the boom being shown in the working phase indicator 300a. Accordingly, when the user chooses to press the button 'following' 513 of the control aggregate 510a, for example, the working cycle of boom 1 is controlled to transfer to the following working phase (provided this is allowed). On the basis of this input, each information element in the working phase indicator 300a is updated. For example, field 312a may indicate, dimmed, a phase that is activated when start button 512 is pressed and the active phase (when automatic working cycle mode is active) emphasized.

In accordance with an embodiment, the working situation and/or a change therein is also indicated in one or more input devices 204. In this case, a small display or another means for displaying said information may be arranged in connection with the input device 204, for example. In connection with the update of the working phase indicator 300 illustrated above, the control unit 200 is also able to update the data indicated in the input device. At its simplest this can be arranged for instance by means of lights in the input device 204. For example, a signal light controlled by the control unit 200 on the basis of the working phase may be arranged in the keys 511 to 514 of the control panel 500 illustrated in Figure 5b or in connection therewith.

In some cases, the characteristics disclosed in the present application may be used as such, irrespective of the other characteristics. On the other hand, the characteristics disclosed in the present application may be combined for generating different combinations, if need be. The drawings and the related description are only intended to illustrate the idea of the invention. The details of the invention may vary within the scope of the claims.

## Claims

1. A control apparatus for controlling a rock drilling rig (1) performing a multi-phase rock drilling event comprising three or more different working phases, the control apparatus comprising a display (202), an input device (204) for receiving user inputs and at least one control unit (200) that controls information to be displayed on the display (202), **characterized in that** the control unit (200) is arranged to display a working phase indicator (300) on the display (202), and that one or more rock drilling phase-specific display information elements are associated with at least some of the different working phases of the rock drilling event in binding information stored in a memory (206) of the control apparatus,
the control apparatus is arranged to specify (400) one of the different working phases of the rock drilling event, and
the control unit (200) is arranged to update (402; 404) the working phase indicator (300) so as to display at least one display information element that is specified on the basis of information indicative of the working phase and the binding information associating the working phases of the rock drilling event and display information elements with each other, wherein the control unit (200) is arranged to display a plurality of information elements in the working phase indicator (300), at least two information elements at a time, each of the information elements indicating a different working phase, the working phase indicator being adapted to indicate at least two of a present working phase, a previous working phase or a following working phase, and
wherein each one of the present working phase, the previous working phase and the following working phase is one of the three or more different working phases of the rock drilling event.

2. A control apparatus as claimed in claim 1, **characterized in that** the input device (204) is arranged to receive an input from a user for changing working phases, and
the control apparatus is arranged to update the display information elements to be displayed in the working phase indicator (300) in response to an input received from the input device (204) and indicating a change of working phase.

3. A control apparatus as claimed in any one of the preceding claims, **characterized in that** the control apparatus is arranged to check if the working phase is inhibited in the current situation of the rock drilling event, and
the control unit (200) is arranged to display the inhibited working phase using a display information element deviating from an allowed working phase.

4. A control apparatus as claimed in any one of the preceding claims, **characterized in that** the control apparatus is arranged to prevent a change of rock drilling phase to an inhibited working phase in response to an input received from a user implying a transfer to the inhibited working phase, or the control apparatus is arranged to prevent user selections for a transfer to the inhibited working phase.

5. A control apparatus as claimed in any one of the preceding claims, **characterized in that** different selectable operating modes are set in the control apparatus, according to which the transfer between the different working states is specified, and
the control unit (200) is arranged to update the display information elements to be displayed in the working phase indicator (300) in accordance with the operating mode in use.

6. A control apparatus as claimed in any one of the preceding claims, **characterized in that** the input device (204) comprises drilling unit-specific input device sections for drilling unit-specifically controlling each drilling unit of the drilling apparatus, and
the control unit (200) is arranged to display the special working phase indicator (300a to 300c) for each drilling unit on the display and to update the working phase indicator on the basis of an input relating to said working phase indicator (300a to 300c) and detected in the input device section.

7. A control apparatus as claimed in any one of the preceding claims, **characterized in that**
the control unit (200) is arranged to specify the information element to be displayed in the working phase indicator (300) on the basis of said binding information and the state information indicative of the current working phase or an identifier, and
the control unit (200) is arranged to display at least one display information element specified on the basis of said binding information and the state information indicative of the current working phase or the identifier.

8. A control apparatus as claimed in any one of the preceding claims, **characterized in that** it further comprises at least one drilling management unit arranged to maintain a state machine about a rock drilling event, whereby
the drilling management unit is arranged to transmit the state information to the control unit controlling the display for indicating at least the current working phase, and
said control unit is arranged to specify the at least one display information element to be displayed in the working phase indicator (300) on the basis of the state information received from the drilling management unit.

9. A rock drilling rig (1) comprising means for performing a multiphase rock drilling event, **characterized in that** the rock drilling rig (1) comprises a control apparatus as claimed in any one of claims 1 to 8.

10. A computer program product for controlling at least one data processing device of a rock drilling rig (1), **characterized in that** the computer program product comprises computer program code for controlling, when executed in a processor of the data processing device, a control system to:
display a working phase indicator (300) comprising at least one rock drilling phase-specific display information element associated with a working phase of a rock drilling event comprising three or more different working phases, on a display,
specify (400) one of the three or more different working phases of the rock drilling event, and
update (402; 404) the working phase indicator so as to display at least one display information element that is specified on the basis of information indicative of the working phase and binding information associating the working phases of the rock drilling event and display information elements with each other and being stored in a memory (206), and
to display a plurality of information elements in the working phase indicator (300), at least two information elements at a time, each of the information elements indicating a different working phase, the working phase indicator being adapted to indicate at least two of a present working phase, a previous working phase or a following working phase,
wherein each one of the present working phase, the previous working phase, and the following working phase is one of the three or more different working phases of the rock drilling event.

11. A computer program product as claimed in claim 10, **char**- **acterized** in that the computer program product comprises computer program code for controlling the control system to receive an input about a change of working phase from a user, and
computer program code for controlling the control system to update the display information elements to be displayed in the working phase indicator in response to an input received from an input device and indicating a change of working phase.

12. A computer program product as claimed in claim 10 or 11, **characterized by** the computer program product comprising computer program code for controlling the control system to specify the information element to be displayed in the working phase indicator (300) on the basis of said binding information and state information indicative of the current working phase, and
computer program code for controlling the control system to display the at least one specified display information element on the display on the basis of said binding information and the state information indicative of the current working phase.

13. A method for controlling a rock drilling rig (1) performing a multiphase rock drilling event comprising three or more different working phases, the rock drilling rig comprising a control apparatus comprising a display (202), an input device (204) for receiving user inputs and at least one control unit (200) that controls information to be displayed on the display (202), **characterized in that** method comprises
displaying a working phase indicator (300) on the display (202) and associating one or more rock drilling phase-specific display information elements with at least some of the different working phases of the rock drilling event in binding information stored in a memory (206) of the control apparatus,
specifying (400) in the control apparatus one of the different working phases of the rock drilling event, and
updating (402; 404) the working phase indicator (300) so as to display at least one display information element that is specified on the basis of information indicative of the working phase and the binding information associating the working phases of the rock drilling event and display information elements with each other, wherein a plurality of information elements are displayed in the working phase indicator (300), at least two information elements at a time, each of the information elements indicating a different working phase, the working phase indicator being adapted to indicate at least two of a present working phase, a previous working phase or a following working phase, and
wherein each one of the present working phase, the previous working phase and the following working phase is one of the three or more working phases of the rock drilling event.

14. A method as claimed in claim 13, **characterized in that** the method further comprises
receiving an input from a user for changing working phases, and
updating the display information elements to be displayed in the working phase indicator (300) in response to an input received from the input device (204) and indicating a change of working phase.

15. A method as claimed in claim 13 or 14, **characterized in that** the method further comprises checking if the working phase is inhibited in the current situation of the rock drilling event, and
displaying the inhibited working phase using a display information element deviating from an allowed working phase.

## Patentansprüche

1. Steuereinrichtung zum Steuern einer Gesteinsbohrmaschine (1), die einen mehrphasigen Gesteinsbohrvorgang durchführt, der drei oder mehr unterschiedliche Arbeitsphasen umfasst, wobei die Steuereinrichtung eine Anzeige (202), eine Eingabevorrichtung (204) zum Empfangen von Benutzereingaben und mindestens eine Steuereinheit (200), die auf der Anzeige (202) anzuzeigenden Informationen steuert, umfasst, **dadurch gekennzeichnet, dass** die Steuereinheit (200) eingerichtet ist, um einen Arbeitsphasenindikator (300) auf der Anzeige (202) anzuzeigen, und dass ein oder mehrere gesteinsbohrphasenspezifische Anzeigeinformationselemente mit mindestens einigen der unterschiedlichen Arbeitsphasen des Gesteinsbohrvorgangs in verbindlichen Informationen, die in einem Speicher (206) der Steuereinrichtung gespeichert sind, verknüpft sind,
die Steuereinrichtung eingerichtet ist, um eine der unterschiedlichen Arbeitsphasen des Gesteinsbohrvorgangs zu spezifizieren (400), und
die Steuereinrichtung (200) eingerichtet ist, um den Arbeitsphasenindikator (300) derart zu aktualisieren (402; 404), dass dieser mindestens ein Anzeigeinformationselement anzeigt, das auf der Grundlage von die Arbeitsphase angebenden Informationen und der verbindlichen Informationen, die die Arbeitsphasen des Gesteinsbohrvorgangs und die Anzeigeinformationselemente miteinander verknüpfen, spezifiziert wird, wobei die Steuereinheit (200) eingerichtet ist, um eine Vielzahl von Informationselementen im Arbeitsphasenindikator (300) anzuzeigen, mindestens zwei Informationselemente zur gleichen Zeit, wobei jedes der Informationselemente eine unterschiedliche Arbeitsphase angibt, wobei der Arbeitsphasenindikator angepasst ist, um mindestens zwei von einer gegenwärtigen Arbeitsphase, einer vorherigen Arbeitsphase oder einer folgenden Arbeitsphase anzugeben, und
wobei jede von der gegenwärtigen Arbeitsphase, der vorherigen Arbeitsphase und der folgenden Arbeitsphase eine der drei oder mehr unterschiedlichen Arbeitsphasen des Gesteinsbohrvorgangs ist.

2. Steuereinrichtung nach Anspruch 1, **dadurch gekennzeichnet, dass** die Eingabevorrichtung (204) eingerichtet ist, um eine Eingabe von einem Benutzer zum Ändern von Arbeitsphasen zu empfangen, und
die Steuereinrichtung eingerichtet ist, um die im Arbeitsphasenindikator (300) anzuzeigenden Anzeigeinformationselemente als Reaktion auf eine von der Eingabevorrichtung (204) empfangenen und eine Arbeitsphasenänderung angebende Eingabe zu aktualisieren.

3. Steuereinrichtung nach einem der vorstehenden Ansprüche, **dadurch gekennzeichnet, dass** die Steuereinrichtung eingerichtet ist, um zu überprüfen, ob die Arbeitsphase in der aktuellen Situation des Gesteinsbohrvorgangs beeinträchtigt wird, und
die Steuereinheit (200) eingerichtet ist, um die beeinträchtigte Arbeitsphase unter Verwendung eines Anzeigeinformationselements, das von einer zugelassenen Arbeitsphase abweicht, anzuzeigen.

4. Steuereinrichtung nach einem der vorstehenden Ansprüche, **dadurch gekennzeichnet, dass** die Steuereinrichtung eingerichtet ist, um eine Gesteinsbohrphasenänderung zu einer beeinträchtigten Arbeitsphase als Reaktion auf eine von einem Benutzer empfangene Eingabe, die einen Übergang zur beeinträchtigten Arbeitsphase impliziert, zu verhindern, oder die Steuereinrichtung eingerichtet ist, Benutzerauswahlen für einen Übergang zur beeinträchtigten Arbeitsphase zu verhindern.

5. Steuereinrichtung nach einem der vorstehenden Ansprüche, **dadurch gekennzeichnet, dass** unterschiedliche auswählbare Betriebsmodi in der Steuereinrichtung eingestellt sind, gemäß denen der Übergang zwischen den unterschiedlichen Arbeitszuständen spezifiziert wird, und
die Steuereinheit (200) eingerichtet ist, um die im Arbeitsphasenindikator (300) anzuzeigenden Anzeigeinformationselemente in Übereinstimmung mit dem verwendeten Betriebsmodus zu aktualisieren.

6. Steuereinrichtung nach einem der vorstehenden Ansprüche, **dadurch gekennzeichnet, dass** die Eingabevorrichtung (204) bohreinheitsspezifische Eingabevorrichtungsabschnitte zum bohreinheitsspezifischen Steuern jeder Bohreinheit der Bohreinrichtung umfasst und
die Steuereinheit (200) eingerichtet ist, um den besonderen Arbeitsphasenindikator (300a bis 300c) für jede Bohreinheit auf der Anzeige anzuzeigen und den Arbeitsphasenindikator auf der Grundlage einer Eingabe, die sich auf den Arbeitsphasenindikator (300a bis 300c) bezieht und im Eingabevorrichtungsabschnitt erfasst wird, zu aktualisieren.

7. Steuereinrichtung nach einem der vorstehenden Ansprüche, **dadurch gekennzeichnet, dass**
die Steuereinheit (200) eingerichtet ist, um das im Arbeitsphasenindikator (300) anzuzeigende Informationselement auf der Grundlage der verbindlichen Informationen und der die aktuelle Arbeitsphase angebenden Zustandsinformationen oder einer Kennung zu spezifizieren, und
die Steuereinheit (200) eingerichtet ist, um mindestens ein Anzeigeinformationselement anzuzeigen, das auf der Grundlage der verbindlichen Informationen und der die aktuelle Arbeitsphase angebenden Zustandsinformationen oder der Kennung spezifiziert wird.

8. Steuereinrichtung nach einem der vorstehenden Ansprüche, **dadurch gekennzeichnet, dass** sie weiter mindestens eine Bohrverwaltungseinheit umfasst, die eingerichtet ist, um einen Zustandsautomaten über einen Gesteinsbohrvorgang zu führen, wobei
die Bohrverwaltungseinheit eingerichtet ist, um die Zustandsinformationen an die Steuereinheit weiterzugeben, die die Anzeige zum Angeben mindestens der aktuellen Arbeitsphase steuert, und
die Steuereinheit eingerichtet ist, um das mindestens eine im Arbeitsphasenindikator (300) anzuzeigende Anzeigeinformationselement auf der Grundlage der von der Bohrverwaltungseinheit empfangenen Zustandsinformationen zu spezifizieren.

9. Gesteinsbohrmaschine (1), umfassend Mittel zum Durchführen eines mehrphasigen Gesteinsbohrvorgangs, **dadurch gekennzeichnet, dass** die Gesteinsbohrmaschine (1) eine Steuereinrichtung nach einem der Ansprüche 1 bis 8 umfasst.

10. Computerprogrammprodukt zum Steuern mindestens einer Datenverarbeitungsvorrichtung einer Gesteinsbohrmaschine (1), **dadurch gekennzeichnet, dass** das Computerprogrammprodukt Computerprogrammcode zum Steuern, wenn in einem Prozessor der Datenverarbeitungsvorrichtung ausgeführt, eines Steuersystems zum:
Anzeigen, auf einer Anzeige, eines Arbeitsphasenindikators (300), der mindestens ein gesteinsbohrphasenspezifisches Anzeigeinformationselement umfasst, das mit einer Arbeitsphase eines Gesteinsbohrvorgangs, der drei oder mehr unterschiedliche Arbeitsphasen umfasst, verknüpft ist,
Spezifizieren (400) einer der drei oder mehr unterschiedlichen Arbeitsphasen des Gesteinsbohrvorgangs, und
Aktualisieren (402; 404) des Arbeitsphasenindikators derart, dass dieser mindestens ein Anzeigeinformationselement anzeigt, das auf der Grundlage von die Arbeitsphase angebenden Informationen und verbindlichen Informationen, die die Arbeitsphasen des Gesteinsbohrvorgangs und Anzeigeinformationselemente miteinander verknüpfen und in einem Speicher (206) gespeichert sind, spezifiziert wird, und
Anzeigen einer Vielzahl von Informationselementen im Arbeitsphasenindikator (300), mindestens zwei Informationselemente zur gleichen Zeit, wobei jedes der Informationselemente eine unterschiedliche Arbeitsphase angibt, wobei der Arbeitsphasenindikator angepasst ist, um mindestens zwei von einer gegenwärtigen Arbeitsphase, einer vorherigen Arbeitsphase oder einer folgenden Arbeitsphase anzugeben,
wobei jede von der gegenwärtigen Arbeitsphase, der vorherigen Arbeitsphase und der folgenden Arbeitsphase eine der drei oder mehr unterschiedlichen Arbeitsphasen des Gesteinsbohrvorgangs ist.

11. Computerprogrammprodukt nach Anspruch 10, **dadurch gekennzeichnet, dass** das Computerprogrammprodukt Computerprogrammcode zum Steuern des Steuersystems umfasst, um eine Eingabe über eine Arbeitsphasenänderung von einem Benutzer zu empfangen, und
Computerprogrammcode zum Steuern des Steuersystems, um die im Arbeitsphasenindikator anzuzeigenden Anzeigeinformationselemente als Reaktion auf eine von einer Eingabevorrichtung empfangenen und eine Arbeitsphasenänderung angebende Eingabe zu aktualisieren.

12. Computerprogrammprodukt nach Anspruch 10 oder 11, **dadurch gekennzeichnet, dass** das Computerprogrammprodukt Computerprogrammcode zum Steuern des Steuersystems umfasst, um das im Arbeitsphasenindikator (300) anzuzeigende Informationselement auf der Grundlage der verbindlichen Informationen und die aktuelle Arbeitsphase angebenden Zustandsinformationen zu spezifizieren, und
Computerprogrammcode zum Steuern des Steuersystems, um das mindestens eine spezifizierte Anzeigeinformationselement auf der Grundlage der verbindlichen Informationen und der die aktuelle Arbeitsphase angebenden Zustandsinformationen auf der Anzeige anzuzeigen.

13. Verfahren zum Steuern einer Gesteinsbohrmaschine (1), die einen mehrphasigen Gesteinsbohrvorgang durchführt, umfassend drei oder mehr unterschiedliche Arbeitsphasen, wobei die Gesteinsbohrmaschine eine Steuereinrichtung umfasst, umfassend eine Anzeige (202), eine Eingabevorrichtung (204) zum Empfangen von Benutzereingaben und mindestens eine Steuereinheit (200), die auf der Anzeige (202) anzuzeigende Informationen steuert, **dadurch gekennzeichnet, dass** das Verfahren umfasst
Anzeigen eines Arbeitsphasenindikators (300) auf der Anzeige (202) und Verknüpfen eines oder mehrerer gesteinsbohrphasenspezifischer Anzeigeinformationselemente mit mindestens einigen der unterschiedlichen Arbeitsphasen des Gesteinsbohrvorgangs in verbindlichen Informationen, die in einem Speicher (206) der Steuervorrichtung gespeichert sind,
Spezifizieren (400), in der Steuereinrichtung, einer der unterschiedlichen Arbeitsphasen des Gesteinsbohrvorgangs, und
Aktualisieren (402;404) des Arbeitsphasenindikators (300) derart, dass dieser mindestens ein Anzeigeinformationselement anzeigt, das auf der Grundlage von die Arbeitsphase angebenden Informationen und der verbindlichen Informationen, die die Arbeitsphasen des Gesteinsbohrvorgangs und Anzeigeinformationselemente miteinander verknüpfen, spezifiziert wird,
wobei eine Vielzahl von Informationselementen im Arbeitsphasenindikator (300) angezeigt werden, mindestens zwei Informationselemente zur gleichen Zeit, wobei jedes der Informationselemente eine unterschiedliche Arbeitsphase angibt, wobei der Arbeitsphasenindikator angepasst ist, um mindestens zwei von einer gegenwärtigen Arbeitsphase, einer vorherigen Arbeitsphase oder einer folgenden Arbeitsphase anzugeben, und
wobei jede von der gegenwärtigen Arbeitsphase, der vorherigen Arbeitsphase und der folgenden Arbeitsphase eine der drei oder mehr unterschiedlichen Arbeitsphasen des Gesteinsbohrvorgangs ist.

14. Verfahren nach Anspruch 13, **dadurch gekennzeichnet, dass** das Verfahren weiter umfasst
Empfangen einer Eingabe von einem Benutzer zum Ändern von Arbeitsphasen, und
Aktualisieren der im Arbeitsphasenindikator (300) anzuzeigenden Anzeigeinformationselemente als Reaktion auf eine von der Eingabevorrichtung (204) empfangenen und eine Arbeitsphasenänderung angebende Eingabe.

15. Verfahren nach Anspruch 13 oder 14, **dadurch gekennzeichnet, dass** das Verfahren weiter ein Überprüfen umfasst, ob die Arbeitsphase in der aktuellen Situation des Gesteinsbohrvorgangs beeinträchtigt wird, und
Anzeigen der beeinträchtigten Arbeitsphase unter Verwendung eines Anzeigeinformationselements, das von einer zugelassenen Arbeitsphase abweicht.

## Revendications

1. Appareil de commande pour commander une installation de forage de roches (1) effectuant un événement de forage de roches multiphase comprenant trois ou plusieurs différentes phases de travail, l'appareil de commande comprenant un dispositif d'affichage (202), un dispositif d'entrée (204) pour recevoir des entrées utilisateur et au moins une unité de commande (200) qui commande des informations à afficher sur le dispositif d'affichage (202), **caractérisé en ce que** l'unité de commande (200) est agencée pour afficher un indicateur de phase de travail (300) sur le dispositif d'affichage (202), et **en ce qu'**un ou plusieurs éléments d'information d'affichage propres aux phases de forage de roches sont associés à au moins certaines des différentes phases de travail de l'événement de forage de roches dans des informations de liaison stockées dans une mémoire (206) de l'appareil de commande,
l'appareil de commande est agencé pour spécifier (400) une des différentes phases de travail de l'événement de forage de roches, et
l'unité de commande (200) est agencée pour actualiser (402 ; 404) l'indicateur de phase de travail (300) de manière à afficher au moins un élément d'information d'affichage qui est spécifié sur la base d'informations indicatives de la phase de travail et des informations de liaison associant les phases de travail de l'événement de forage de roches et des éléments d'information d'affichage les uns avec les autres, dans lequel l'unité de commande (200) est agencée pour afficher une pluralité d'éléments d'information dans l'indicateur de phase de travail (300), au moins deux éléments d'information en même temps, chacun des éléments d'information indiquant une phase de travail différente, l'indicateur de phase de travail étant adapté pour indiquer au moins deux parmi une phase de travail actuelle, une phase de travail précédente ou une phase de travail suivante, et
dans lequel chacune de la phase de travail actuelle, de la phase de travail précédente et de la phase de travail suivante est une des trois ou plusieurs différentes phases de travail de l'événement de forage de roches.

2. Appareil de commande selon la revendication 1, **caractérisé en ce que** le dispositif d'entrée (204) est agencé pour recevoir une entrée d'un utilisateur pour changer de phases de travail, et
l'appareil de commande est agencé pour actualiser les éléments d'information d'affichage à afficher dans l'indicateur de phase de travail (300) en réponse à une entrée reçue du dispositif d'entrée (204) et indiquant un changement de phase de travail.

3. Appareil de commande selon l'une quelconque des revendications précédentes, **caractérisé en ce que** l'appareil de commande est agencé pour vérifier si la phase de travail est entravée dans la situation actuelle de l'événement de forage de roches, et
l'unité de commande (200) est agencée pour afficher la phase de travail entravée en utilisant un élément d'information d'affichage s'écartant d'une phase de travail autorisée.

4. Appareil de commande selon l'une quelconque des revendications précédentes, **caractérisé en ce que** l'appareil de commande est agencé pour empêcher un changement de phase de forage de roches en une phase de travail entravée en réponse à une entrée reçue d'un utilisateur impliquant un transfert vers la phase de travail entravée, ou l'appareil de commande est agencé pour empêcher des sélections utilisateur pour un transfert vers la phase de travail entravée.

5. Appareil de commande selon l'une quelconque des revendications précédentes, **caractérisé en ce que** des modes de fonctionnement sélectionnables différents sont définis dans l'appareil de commande, selon lesquels le transfert entre les différents états de travail est spécifié, et
l'unité de commande (200) est agencée pour actualiser les éléments d'information d'affichage à afficher dans l'indicateur de phase de travail (300) selon le mode de fonctionnement en utilisation.

6. Appareil de commande selon l'une quelconque des revendications précédentes, **caractérisé en ce que** le dispositif d'entrée (204) comprend des sections de dispositif d'entrée propres à l'unité de forage pour commander spécifiquement à l'unité de forage chaque unité de forage de l'appareil de forage, et
l'unité de commande (200) est agencée pour afficher l'indicateur de phase de travail spécial (300a à 300c) pour chaque unité de forage sur le dispositif d'affichage et pour actualiser l'indicateur de phase de travail sur la base d'une entrée relative audit indicateur de phase de travail (300a à 300c) et détectée dans la section de dispositif d'entrée.

7. Appareil de commande selon l'une quelconque des revendications précédentes, **caractérisé en ce que**
l'unité de commande (200) est agencée pour spécifier l'élément d'information à afficher dans l'indicateur de phase de travail (300) sur la base desdites informations de liaison et des informations d'état indicatives de la phase de travail actuelle ou d'un identifiant, et
l'unité de commande (200) est agencée pour afficher au moins un élément d'information d'affichage spécifié sur la base desdites informations de liaison et des informations d'état indicatives de la phase de travail actuelle ou de l'identifiant.

8. Appareil de commande selon l'une quelconque des revendications précédentes, **caractérisé en ce qu'**il comprend en outre au moins une unité de gestion de forage agencée pour maintenir une machine d'états concernant un événement de forage de roches, selon lequel
l'unité de gestion de forage est agencée pour transmettre les informations d'état à l'unité de commande commandant l'affichage pour indiquer au moins la phase de travail actuelle, et
ladite unité de commande est agencée pour spécifier l'au moins un élément d'information d'affichage à afficher dans l'indicateur de phase de travail (300) sur la base des informations d'état reçues depuis l'unité de gestion de forage.

9. Installation de forage de roches (1) comprenant un moyen d'effectuer un événement de forage de roches multiphase, **caractérisée en ce que** l'installation de forage de roches (1) comprend un appareil de commande selon l'une quelconque des revendications 1 à 8.

10. Produit de programme informatique pour commander au moins un dispositif de traitement de données d'une installation de forage de roches (1), **caractérisé en ce que** le produit de programme informatique comprend un code de programme informatique pour commander, lorsqu'il est exécuté dans un processeur du dispositif de traitement de données, un système de commande pour :
afficher un indicateur de phase de travail (300) comprenant au moins un élément d'information d'affichage propre aux phases de forage de roches associé à une phase de travail d'un événement de forage de roches comprenant trois ou plusieurs différentes phases de travail, sur un dispositif d'affichage,
spécifier (400) une des trois ou plusieurs différentes phases de travail de l'événement de forage de roches, et
actualiser (402 ; 404) l'indicateur de phase de travail de manière à afficher au moins un élément d'information d'affichage qui est spécifié sur la base d'informations indicatives de la phase de travail et d'informations de liaison associant les phases de travail de l'événement de forage de roches et des éléments d'information d'affichage les uns avec les autres et étant stockées dans une mémoire (206), et
afficher une pluralité d'éléments d'information dans l'indicateur de phase de travail (300), au moins deux éléments d'information en même temps, chacun des éléments d'information indiquant une phase de travail différente, l'indicateur de phase de travail étant adapté pour indiquer au moins deux parmi une phase de travail actuelle, une phase de travail précédente ou une phase de travail suivante,
dans lequel chacune de la phase de travail actuelle, de la phase de travail précédente et de la phase de travail suivante est une des trois ou plusieurs différentes phases de travail de l'événement de forage de roches.

11. Produit de programme informatique selon la revendication 10, **caractérisé en ce que** le produit de programme informatique comprend un code de programme informatique pour commander le système de commande pour recevoir une entrée concernant un changement de phase de travail d'un utilisateur, et
un code de programme informatique pour commander le système de commande pour actualiser les éléments d'information d'affichage à afficher dans l'indicateur de phase de travail en réponse à une entrée reçue d'un dispositif d'entrée et indiquant un changement de phase de travail.

12. Produit de programme informatique selon la revendication 10 ou 11, **caractérisé par** le produit de programme informatique comprenant un code de programme informatique pour commander le système de commande pour spécifier l'élément d'information à afficher dans l'indicateur de phase de travail (300) sur la base desdites informations de liaison et d'informations d'état indicatives de la phase de travail actuelle, et
un code de programme informatique pour commander le système de commande pour afficher l'au moins un élément d'information d'affichage spécifié sur le dispositif d'affichage sur la base desdites informations de liaison et des informations d'état indicatives de la phase de travail actuelle.

13. Procédé pour commander une installation de forage de roches (1) effectuant un événement de forage de roches multiphase comprenant trois ou plusieurs différentes phases de travail, l'installation de forage de roches comprenant un appareil de commande comprenant un dispositif d'affichage (202), un dispositif d'entrée (204) pour recevoir des entrées utilisateur et au moins une unité de commande (200) qui commande des informations à afficher sur le dispositif d'affichage (202), **caractérisé en ce que** le procédé comprend les étapes consistant à
afficher un indicateur de phase de travail (300) sur le dispositif d'affichage (202), et associer un ou plusieurs éléments d'information d'affichage propres aux phases de forage de roches à au moins certaines des différentes phases de travail de l'événement de forage de roches dans des informations de liaison stockées dans une mémoire (206) de l'appareil de commande,
spécifier (400), dans l'appareil de commande, une des différentes phases de travail de l'événement de forage de roches, et
actualiser (402 ; 404) l'indicateur de phase de travail (300) de manière à afficher au moins un élément d'information d'affichage qui est spécifié sur la base d'informations indicatives de la phase de travail et des informations de liaison associant les phases de travail de l'événement de forage de roches et des éléments d'information d'affichage les uns avec les autres,
dans lequel une pluralité d'éléments d'information sont affichés dans l'indicateur de phase de travail (300), au moins deux éléments d'information en même temps, chacun des éléments d'information indiquant une phase de travail différente, l'indicateur de phase de travail étant adapté pour indiquer au moins deux parmi une phase de travail actuelle, une phase de travail précédente ou une phase de travail suivante, et
dans lequel chacune de la phase de travail actuelle, de la phase de travail précédente et de la phase de travail suivante est une des trois ou plusieurs phases de travail de l'événement de forage de roches.

14. Procédé selon la revendication 13, **caractérisé en ce que** le procédé comprend en outre les étapes consistant à
recevoir une entrée d'un utilisateur pour changer de phases de travail, et
actualiser les éléments d'information d'affichage à afficher dans l'indicateur de phase de travail (300) en réponse à une entrée reçue du dispositif d'entrée (204) et indiquant un changement de phase de travail.

15. Procédé selon la revendication 13 ou 14, **caractérisé en ce que** le procédé comprend en outre les étapes consistant à vérifier si la phase de travail est entravée dans la situation actuelle de l'événement de forage de roches, et
afficher la phase de travail entravée en utilisant un élément d'information d'affichage s'écartant d'une phase de travail autorisée.
